(19) **Europäisches Patentamt**

**European Patent Office**

**Office européen des brevets**

(11) **EP 1 316 557 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.$^7$: **C07F 7/08**, C07F 7/18

(21) Anmeldenummer: **02021004.3**

(22) Anmeldetag: **20.09.2002**

(54) **Verfahren zur Herstellung von in 3-Stellung funktionalisierten Propylsilanen**

Process for the preparation of in 3-position functionalised propylsilanes

Procédé de préparation des propylsilanes substituée en position 3

(84) Benannte Vertragsstaaten:
**BE DE IT**

(30) Priorität: **31.10.2001 DE 10153795**

(43) Veröffentlichungstag der Anmeldung:
**04.06.2003 Patentblatt 2003/23**

(73) Patentinhaber: **Degussa AG**
**40474 Düsseldorf (DE)**

(72) Erfinder:
• **Sonnenschein, Raymund, Dr.**
**60594 Frankfurt (DE)**

• **Batz-Sohn, Christoph, Dr.**
**63454 Hanau-Mittelbuchen (DE)**

(56) Entgegenhaltungen:
EP-A- 0 152 803        EP-A- 0 823 434
EP-A- 1 229 039        US-A- 5 359 113

• ELVERS B ET AL: "Ullmann's Encyclopedia of Industrial Chemistry, Fifth Ed., Vol. B4, pp 321-328" , ULLMANN'S ENCYCLOPEDIA OF INDUSTRIAL CHEMISTRY. PRINCIPLES OF CHEMICAL REACTION ENGINEERING AND PLANT DESIGN, WEINHEIM, VCH VERLAG, DE, VOL. VOL. B4, PAGE(S) 321-328 XP002184035 * Seite 321 *

## Beschreibung

Die Erfindung betrifft ein Verfahren zur Herstellung von in 3-Stellung funktionalisierten Propylsilanen

Es ist bekannt, daß Hydrogensilane sich mit zum Beispiel Allylchlorid in Gegenwart von homogenen oder heterogenen Platin-Katalysatoren zu 3-Chlorpropylsilanen umsetzen lassen. Diese Reaktion wird allgemein als Hydrosilylierung bezeichnet (siehe beispielsweise Gleichung I).

$$Cl\text{-}CH_2\text{-}CH\text{=}CH_2 + HSiCl_3 \rightarrow Cl\text{-}CH_2\text{-}CH_2\text{-}CH_2\text{-}SiCl_3 \qquad (I)$$

Von homogener Hydrosilylierung spricht man, wenn als Katalysatoren lösliche Platinverbindungen, im einfachsten Falle zum Beispiel $H_2PtCl_6$ x 6 $H_2O$ eingesetzt werden (vgl. DE-OS 28 51 456, CS-PS 176 910, US-PS 4,292,433, US-PS 4,292,434, DE-AS 11 87 240, DE-PS 11 65 028). Bei heterogenen Hydrosilylierungen werden elementares Platin oder Platinverbindungen auf einem Träger verwendet (vgl. US-PS 2,637,738, DE-PS 20 12 229, DE-PS 28 15 316).

Aus den Dokumenten US-A-5 359 113, EP-A-0 152 803 und EP-A-0 823 434 ist die Umsetzung von Allylhalogenid mit Trichlorsilan bzw. Methyldichlorsilan bekannt. Bei dem Verfahren wurden heterogene Pt-Katalysatoren eingesetzt.

Es ist weiterhin bekannt, daß bei der Umsetzung von zum Beispiel Allylchlorid mit Hydrogensilanen zu 3-Chlorpropylsilanen ein Teil des eingesetzten Allylchlorids mit dem Hydrogensilan in einer Nebenreaktion unter Bildung von Propen und des dem jeweiligen Hydrogensilan entsprechenden Chlprsilans reagiert (siehe beispielsweise Gleichung II).

$$Cl\text{-}CH_2\text{-}CH\text{=}CH_2 + HSiCl_3 \text{ -> } CH_3\text{-}CH\text{=}CH_2 + SiCl_4 \qquad (II)$$

So werden zum Beispiel bei der Umsetzung von Allylchlorid mit Trichlorsilan 25 - 30 Mol-% des zur Reaktion gelangenden Allylchlorids durch diese Nebenreaktion in Propen umgewandelt. Dabei entsteht eine äquivalente Menge an Siliciumtetrachlorid.

Das Molverhältnis von entstandenem Chlorpropylsilan zu Siliciumtetrachlorid ist ein Maß für die Selektivität der Reaktion und erreicht typischerweise Werte zwischen 2,33 : 1 (70 % Ausbeute, bezogen auf Allylchlorid) und 3 : 1 (75 % Ausbeute).

Es ist weiterhin bekannt, daß durch spezielle Reaktionsführung in Druckapparaturen die Propenbildung gemindert werden kann. Diese Arbeitsweise hat zur Folge, daß das Propen quantitativ mit dem Hydrogensilan zu Propylsilanen weiterreagiert. Auch bei den unter Normaldruck in der üblichen Art durchgeführten Reaktionen setzt sich in beträchtlichem Umfang das aus der Nebenreaktion stammende Propen in einer weiteren Nebenreaktion mit Hydrogensilan zu den entsprechenden Propylsilanen um (vgl. auch DE 34 04 703 C) (siehe beispielsweise Gleichung 3).

$$CH_3\text{-}CH\text{=}CH_2 + HSiCl_3 \text{ -> } CH_3\text{-}CH_2\text{-}CH_2\text{-}SiCl_3 \qquad (III)$$

So werden zum Beispiel in einer technischen Anlage bei einer heterogen-katalytischen Umsetzung von Allylchlorid und Trichlorsilan in einer mit platinierter Aktivkohle gefüllten Säule pro 1000 kg 3-Chlorpropyltrichlorsilan bis zu 230 kg Propyltrichlorsilan erhalten. Das bedeutet einen Mehrbedarf von ca. 28 % an Trichlorsilan, bezogen auf die ins Zielprodukt eingegangene Trichlorsilan-Menge (vgl. auch DE 41 19 994 A1).

Die bekannten Verfahren haben den Nachteil, daß zum einen ein zusätzlicher Bedarf an Hydrogensilan besteht, und zum anderen die unerwünschten Propylsilane schwierig abzutrennen sind. Hinzu kommt, daß es für diese Verbindungen kaum Einsatzgebiete gibt, wodurch diese kostenintensiv entsorgt werden müssen.

Aus dem Dokument EP-A 0 519 181 ist bekannt, zur Herstellung von 3-Chlorpropylsilan Allylchlorid im Überschuß einzusetzen.

Das bekannte Verfahren weist den Nachteil auf, daß das Reaktionsgemisch, das destillativ aufgearbeitet werden muß, störende Mengen an Allylchlorid enthält.

Es besteht somit die Aufgabe ein Verfahren zur Herstellung von 3-Chlorpropyltrichlorsilan zu haben, welches diesen Nachteil nicht aufweist.

Gegenstand der Erfindung ist ein Verfahren zur Herstellung von in 3-Stellung funktionalisierten Organosilanen durch Addition von Allylverbindungen der allgemeinen Formel I

$$H_2C=CH - CH_2X \qquad\qquad (I),$$

wobei X = Cl, Br, I, F, CN, SCN, SH, SR, OH, NRR[1] und OR sein kann und R und R[1], beide unabhängig voneinander, $(C_1-C_6)$Alkyl oder $(C_3 - C_7)$Alkyl bedeuten, an Silane der Formel II

$$R^2R^3R^4SiH \qquad\qquad (II),$$

wobei $R^2$, $R^3$, $R^4$, alle unabhängig voneinander, Wasserstoff, Halogen, $(C_1 - C_6)$ Alkyl, $(C_1 - C_6)$Haloalkyl, $(C_3 - C_6)$ Allyl, $(C_1 - C_4)$Alkoxy, Phenyl, Aryl oder Aralkyl bedeuten können, bei Drücken zwischen 1 bar und 25 bar und in Gegenwart eines heterogenen Platinkatalysators, welches dadurch gekennzeichnet ist, daß man die Umsetzung in einer Reaktionskolonne durchführt.

Reaktionskolonnen sind bekannt aus Ullmann's Encyclopedia of Industrial Chemistry, Vol. 34, p. 321 (1992).

Das wesentliche Merkmal der Reaktionskolonne ist, daß die chemische Reaktion gleichzeitig mit dem ersten Schritt der nachfolgenden destillativen Aufbereitung in einer Kolonne durchgeführt wird. Durch die Verwendung der Reaktionskolonne werden Investitionskosten eingespart.

Ein wesentlicher Vorteil ergibt sich aus der erheblichen Verbesserung der Selektivität der Reaktion, die durch den längs der Kolonne auftretenden sehr hohen Überschuß an Trichlorsilan eintritt. Der Anteil an unerwünschtem Propyltrichlorsilan kann dadurch sehr gering gehalten werden. Das erhaltene Produktgemisch ist nahezu frei von Allylchlorid.

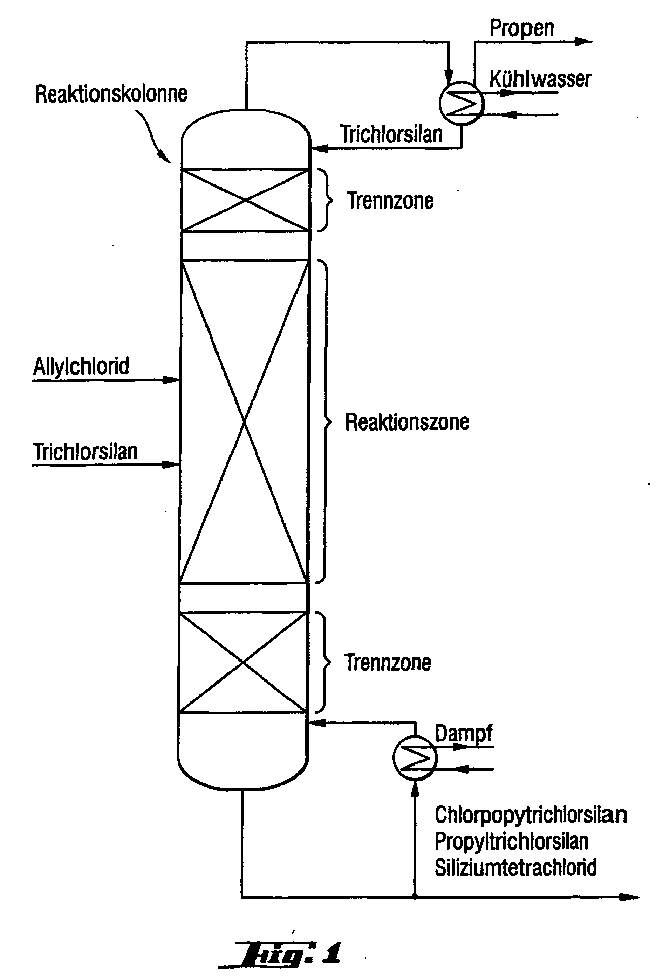

Das erfindungsgemäße Verfahren wird in der Zeichnung gemäß der Figur 1 schematisch dargestellt.

Gemäß Figur 1 werden in die Reaktionszone der Reaktionskolonne, die mit einer bekannten Katalysatorpackung ausgestattet ist, Trichlorsilan und Allylchlorid eingespeist. Trichlorsilan wird bei dem Anfahren im Überschuß zugegeben. Nachdem es sich in dem Kopf der Reaktionskolonne angereichert hat, entspricht das Verhältnis der stöchiometrischen Menge der an der Umsetzung beteiligten Reaktionen. Hierdurch wird erreicht, daß Trichlorsilan nicht mehr über weitere Destillationskolonnen abgetrennt werden muß. Durch diese Verfahrensweise kann ein sehr hoher Trichlorsilan-Überschuß erzielt werden und die Reaktionswärme für die Verdampfung verwendet werden.

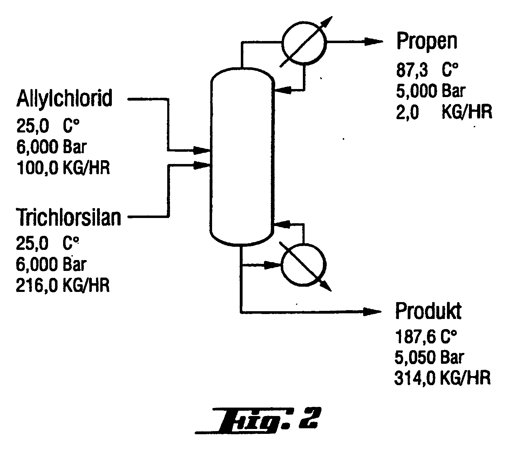

Gemäß Figur 2 wird eine beispielhafte Durchführung des erfindungsgemäßen Verfahrens erläutert. Dargestellt sind Temperatur, Druck und Durchfluß der ein- und austretenden Stoffströme der Reaktionskolonne.

Bei einem Druck von 5 bar$_{abs}$ stellt sich ein für die Reaktion ausreichendes Temperaturprofil zwischen 90°C und 190°C längs der Reaktionskolonne ein. Die Hauptreaktionszone auf Boden 7 und 8 zeigt eine geringe Temperaturerhöhung. Die Mol- und Massenkonzentrationen zeigen, daß Allylchlorid vollständig abreagiert und auf jedem theoretischem Boden der Reaktionskolonne ein hoher Überschuß an Trichlosilan realisiert werden kann.

Die Werte für die einzelnen theoretischen Böden der Reaktionskolonne, wobei Boden 1 den Kondensator und Boden 16 den Verdampfer angeben, sind in Tabelle 1 und 2 dargestellt.

## Tabelle 1

| Stage | Temp C | Pres BAR | Duty KW | LiqFlow KG/HR | VapFlow KG/HR | LiqFeed KG/HR | LiqProd KG/HR |
|---|---|---|---|---|---|---|---|
| 1 | 87,311554 | 5,000000 | -90,887062 | 2000,000000 | 0,000000 | 0,000000 | 2,000000 |
| 2 | 87,494766 | 5,003333 | 0,000000 | 2001,633789 | 2002,000000 | 0,000000 | 0,000000 |
| 3 | 87,792549 | 5,006667 | 0,000000 | 2004,358887 | 2003,633789 | 0,000000 | 0,000000 |
| 4 | 88,286095 | 5,010000 | 0,000000 | 2008,849854 | 2006,358887 | 0,000000 | 0,000000 |
| 5 | 89,119385 | 5,013333 | 0,000000 | 2013,804810 | 2010,849854 | 0,000000 | 0,000000 |
| 6 | 90,809250 | 5,016667 | 0,000000 | 1937,611938 | 2015,804810 | 0,000000 | 0,000000 |
| 7 | 103,560417 | 5,020000 | 0,000000 | 935,114929 | 1939,611938 | 100,000000 | 0,000000 |
| 8 | 103,329338 | 5,023334 | 0,000000 | 940,335876 | 837,112305 | 0,000000 | 0,000000 |
| 9 | 100,237350 | 5,026667 | 0,000000 | 1237,758667 | 842,333252 | 216,000000 | 0,000000 |
| 10 | 102,652802 | 5,030000 | 0,000000 | 1252,029419 | 923,756104 | 0,000000 | 0,000000 |
| 11 | 106,117584 | 5,033333 | 0,000000 | 1273,072388 | 938,026733 | 0,000000 | 0,000000 |
| 12 | 110,585350 | 5,036667 | 0,000000 | 1300,201904 | 959,069702 | 0,000000 | 0,000000 |
| 13 | 115,669167 | 5,040000 | 0,000000 | 1322,888916 | 986,199219 | 0,000000 | 0,000000 |
| 14 | 121,776443 | 5,043334 | 0,000000 | 1290,749512 | 1008,886230 | 0,000000 | 0,000000 |
| 15 | 137,059753 | 5,046667 | 0,000000 | 1110,496826 | 976,746887 | 0,000000 | 0,000000 |
| 16 | 187,578125 | 5,050000 | 48,815884 | 314,002625 | 796,4942263 | 0,000000 | 314,002625 |

EP 1 316 557 B1

**Tabelle 2**

Liquid phase mass fractions

| Stage | ACL | TCS | STC | PTS | CLPTS |
|---|---|---|---|---|---|
| 1 | 8,315258E-11 | 0,985670 | 0,014330 | 1,434470E-08 | 4,212395E-13 |
| 2 | 1,238390E-10 | 0,974996 | 0,025003 | 2,072607E-07 | 4,791602E-11 |
| 3 | 1,834647E-10 | 0,956672 | 0,043325 | 2,965420E-06 | 5,388163E-09 |
| 4 | 2,694364E-10 | 0,925723 | 0,074235 | 4,178848E-05 | 5,952588E-07 |
| 5 | 3,218061E-08 | 0,874520 | 0,124848 | 5,734813E-04 | 5,857088E-05 |
| 6 | 3,855338E-06 | 0,785519 | 0,201808 | 0,007409 | 0,005261 |
| 7 | 3,448435E-04 | 0,477898 | 0,225995 | 0,055633 | 0,240129 |
| 8 | 1,124564E-06 | 0,482808 | 0,225414 | 0,053550 | 0,238227 |
| 9 | 4,086832E-09 | 0,531423 | 0,245938 | 0,041293 | 0,181346 |
| 10 | 1,798244E-11 | 0,446555 | 0,332467 | 0,041389 | 0,179589 |
| 11 | 7,164505E-14 | 0,341412 | 0,439820 | 0,041683 | 0,177084 |
| 12 | 7,778140E-14 | 0,231362 | 0,551711 | 0,042878 | 0,174048 |
| 13 | 7,587603E-14 | 0,137411 | 0,641292 | 0,048920 | 0,172377 |
| 14 | 6,505881E-14 | 0,071324 | 0,665612 | 0,076855 | 0,186209 |
| 15 | 4,055050E-14 | 0,028461 | 0,491229 | 0,151506 | 0,328804 |
| 16 | 1,041760E-14 | 0,005179 | 0,141317 | 0,147762 | 0,705742 |

**Patentansprüche**

1. Verfahren zur Herstellung von in 3-Stellung funktionalisierten Organosilanen durch Addition von Allylverbindungen der allgemeinen Formel I

$$H_2C=CH - CH_2X \qquad\qquad (I),$$

wobei X = Cl, Br, I und F bedeuten, an Silane der Formel II

$$R^2R^3R^4SiH \qquad\qquad (II)$$

wobei $R^2$, $R^3$, $R^4$ Halogen bedeuten, bei Drücken zwischen 1 bar und 25 bar und in Gegenwart eines heterogenen Platinkatalysators, **dadurch gekennzeichnet, daß** man die Umsetzung in einer Reaktionskolonne durchführt, das Silan der Formel (II) bei dem Anfahren im Überschuß zugibt und das Temperaturprofil zwischen 90°C und 190°C längs der Reaktionskolonne ist.

**Claims**

1. Process for the preparation of organosilanes functionalized in the 3-position by the addition of allyl compounds of general formula I:

$$H_2C{=}CH{-}CH_2X \qquad\qquad (I),$$

in which X = Cl, Br, I and F, onto silanes of formula II:

$$R^2R^3R^4SiH \qquad\qquad (II),$$

in which $R^2$, $R^3$ and $R^4$ are halogen, at pressures of between 1 bar and 25 bar and in the presence of a heterogeneous platinum catalyst, **characterized in that** the reaction is carried out in a reaction column, the silane of formula (II) is added in excess on start-up and the temperature profile is between 90°C and 190°C along the reaction column.

**Revendications**

1. Procédé pour la préparation d'organosilanes substitués en position 3 par l'addition de composés allyle de formule générale I

$$H_2C{=}CH - CH_2X \qquad\qquad (I),$$

dans laquelle X désigne Cl, Br, I et F,
aux silanes de formule II

$$R^2R^3R^4SiH \qquad\qquad (II),$$

dans laquelle $R^2$, $R^3$, $R^4$ désignent un atome d'halogène, sous des pressions s'inscrivant entre 1 bar et 25 bars et en présence d'un catalyseur de platine hétérogène,
**caractérisé en ce qu'**
on réalise la conversion dans une colonne de réaction, on ajoute le silane de formule II lors du démarrage en excès, et on utilise un profil de température entre 90°C et 190°C le long de la colonne de réaction.

**Reaktionskolonne**

Propen

Kühlwasser

Trichlorsilan

Trennzone

Allylchlorid

Trichlorsilan

Reaktionszone

Trennzone

Dampf

Chlorpopytrichlorsilan
Propyltrichlorsilan
Siliziumtetrachlorid

*Fig. 1*

**Allylchlorid** ——

25,0 C°
6,000 Bar
100,0 KG/HR

**Trichlorsilan** ——

25,0 C°
6,000 Bar
216,0 KG/HR

**Propen**

87,3 C°
5,000 Bar
2,0 KG/HR

**Produkt**

187,6 C°
5,050 Bar
314,0 KG/HR

Fig. 2